# EUROPEAN PATENT APPLICATION

(11) **EP 3 115 877 A1**
(43) Date of publication of application: **11.01.2017**
(21) Application number: 15772486.5
(22) Date of filing: 31.03.2015
(51) Int. Cl.: G06F 3/0481

(54) **METHOD AND APPARATUS FOR AUTOMATICALLY ADJUSTING INTERFACE ELEMENTS**

(30) Priority: 04.04.2014 CN 201410135821
(71) Applicant: Huawei Device Co., Ltd., Longgang Shenzhen Guangdong 518129 (CN)
(72) Inventor: XU, Shun, Shenzhen Guangdong 518129 (CN); QIAN, Peng, Shenzhen Guangdong 518129 (CN)
(74) Representative: Goddar, Heinz J.
(86) International application number: PCT/CN2015/075471
(87) International publication number: WO 2015/149679

(57) **Abstract**

Embodiments of the present invention provide a method and an apparatus for automatically adjusting an interface element, where the method includes: acquiring an addition operation signal that is generated when a user adds a new interface element, and determining, according to the addition operation signal, a position at which the new interface element is to be placed and required space; and when it is determined, according to the position at which the new interface element is to be placed and the required space, whether remaining continuous space of the first interface is sufficient to accommodate the new interface element, adjusting a position and a size of the interface element on the first interface according to the position at which the new interface element is to be placed and the required space, so that remaining space of the adjusted first interface is sufficient to accommodate the new interface element. In the foregoing method, when space of the first interface is insufficient, a position and a size of an interface element can be automatically adjusted, so that the first interface is sufficient to accommodate the new interface element, and a user does not need to manually operate the interface element, thereby bringing better experience to the user, and improving usage efficiency of a user interface at the same time.

## Description

This application claims priority to Chinese Patent Application No. 201410135821.6, filed with the Chinese Patent Office on April 4, 2014 and entitled "METHOD AND APPARATUS FOR AUTOMATICALLY ADJUSTING INTERFACE ELEMENT", which is incorporated herein by reference in its entirety.

### TECHNICAL FIELD

Embodiments of the present invention relate to computer technologies, and in particular, to a method and an apparatus for automatically adjusting an interface element.

### BACKGROUND

With development of Internet technologies, Widgets (also referred to as widgets)are widely applied to electronic devices such as a smart phone, a tablet computer, and a desktop computer. A Widget is a tiny program view, and can be embedded in another application program and periodically updated. Usually, a widget is embedded in a desktop. Currently, a grid is used in most desktop designs. For example, a 4×4 grid or a 5×5 grid is used. To adapt to the design of a desktop, a size of a widget needs to be set. Usually, a size of a widget is fixed.

Because of a fixed size of a desktop grid and a difference in remaining continuous space of each screen, if a widget has only one size, flexibility of placing the widget on a desktop is poor. For example, remaining continuous space of some desktops is small, and therefore a widget cannot be placed, while remaining continuous space of some desktops is very large, and therefore when a small-sized widget is used, it is inconvenient for a user to perform an operation. To resolve this problem, one manner is to provide different sizes of widget icons of a same widget for a user to select. Another manner is to provide a widget whose size is adjustable. For example, sizes of a browser bookmark and a calendar widget provided by goole are adjustable.

However, both of the two manners in the prior art require manual selection or adjustment by a user, and user operations are complex, which brings poor experience to the user. In addition, for the second manner, difficulty in widget development is increased, and widgets supporting this solution are very rare currently.

### SUMMARY

Embodiments of the present invention provide a method and an apparatus for automatically adjusting an interface element, which can automatically adjust a position and a size of an interface element. This facilitates user operation, improves user experience, and improves usage efficiency of a user interface at the same time.

A first aspect of the present invention provides a method for automatically adjusting an interface element, including:
acquiring an addition operation signal that is generated when a user adds a new interface element, and determining, according to the addition operation signal, a position at which the new interface element is to be placed on a first interface and space required for placing the new interface element; and
when it is determined, according to the position at which the new interface element is to be placed and the required space, that remaining continuous space of the first interface is insufficient to accommodate the new interface element, adjusting a position and a size of the interface element on the first interface according to the position at which the new interface element is to be placed and the required space, so that remaining continuous space of the adjusted first interface is sufficient to accommodate the new interface element, and adding the new interface element to the adjusted first interface.

With reference to the first aspect of the present invention, in a first possible implementation manner of the first aspect of the present invention, the adjusting a position and a size of the interface element on the first interface according to the position at which the new interface element is to be placed and the required space, so that remaining continuous space of the adjusted first interface is sufficient to accommodate the new interface element, and adding the new interface element to the adjusted first interface includes:
if the interface element on the first interface comprises at least one widget icon, separately detecting whether the at least one widget icon has a corresponding small-sized widget icon;
if the at least one widget icon has a corresponding small-sized widget icon, replacing the at least one widget icon with the corresponding small-sized widget icon according to the space required by the new interface element; and
if the remaining continuous space of the adjusted first interface is sufficient to accommodate the new interface element, adding the new interface element to the remaining continuous space of the adjusted first interface.

With reference to the first possible implementation manner of the first aspect of the present invention, in a second possible implementation manner of the first aspect of the present invention, if the at least one widget icon does not have a corresponding small-sized widget icon, the method further includes:
moving the interface element on the first interface to a second interface, so that the remaining continuous space of the adjusted first interface is sufficient to accommodate the new interface element, and adding the new interface element to the remaining continuous space of the adjusted first interface; or
moving the interface element other than the widget icons on the first interface to a preset folder, so that the remaining continuous space of the adjusted first interface is sufficient to accommodate the new interface element, and adding the new interface element to the remaining continuous space of the adjusted first interface.

With reference to the first possible implementation manner of the first aspect of the present invention, in a third possible implementation manner of the first aspect of the present invention, if the remaining continuous space of the adjusted first interface is insufficient to accommodate the new interface element, the method further includes:
moving the interface element on the first interface to a second interface, so that the remaining continuous space of the adjusted first interface is sufficient to accommodate the new interface element, and adding the new interface element to the remaining continuous space of the adjusted first interface; or
moving the interface element other than the widget icons on the first interface to a preset folder, so that the remaining continuous space of the adjusted first interface is sufficient to accommodate the new interface element, and adding the new interface element to the remaining continuous space of the adjusted first interface.

With reference to the first aspect of the present invention, in a fourth possible implementation manner of the first aspect of the present invention, the adjusting a position and a size of the interface element on the first interface according to the position at which the new interface element is to be placed and the required space, so that remaining continuous space of the adjusted first interface is sufficient to accommodate the new interface element, and adding the new interface element to the adjusted first interface includes:
when the interface element on the first interface does not include a widget icon, moving the interface element on the first interface to a second interface, so that the remaining continuous space of the adjusted first interface is sufficient to accommodate the new interface element, and adding the new interface element to the remaining continuous space of the adjusted first interface; or
when the interface element on the first interface does not include a widget icon, moving the interface element on the first interface to a preset folder, so that the remaining continuous space of the adjusted first interface is sufficient to accommodate the new interface element, and adding the new interface element to the remaining continuous space of the adjusted first interface.

With reference to the first aspect of the present invention and the first to the fourth possible implementation manners of the first aspect of the present invention, in a fifth possible implementation manner of the first aspect of the present invention, the method further includes:
when a deletion operation signal of deleting an interface element on the first interface is detected, determining whether there is a widget icon on the first interface; and
if there is a widget icon on the first interface, detecting whether the widget icon has a corresponding large-sized widget icon, and if the widget icon has a corresponding large-sized widget icon, after the interface element on the first interface is deleted, replacing the widget icon with the corresponding large-sized widget icon.

A second aspect of the present invention provides an apparatus for automatically adjusting an interface element, including:
an acquiring module, configured to acquire an addition operation signal that is generated when a user adds a new interface element;
a determining module, configured to determine, according to the addition operation signal acquired by the acquiring module, a position at which the new interface element is to be placed on the first interface and space required for placing the new interface element; and
an adjustment module, configured to: when the determining module determines, according to the position at which the new interface element is to be placed and the required space, that remaining continuous space of the first interface is insufficient to accommodate the new interface element, adjust a position and a size of the interface element on the first interface according to the position at which the new interface element is to be placed and the required space, so that remaining continuous space of the adjusted first interface is sufficient to accommodate the new interface element, and add the new interface element to the adjusted first interface.

With reference to the second aspect of the present invention, in a first possible implementation manner of the second aspect of the present invention, the adjustment module includes:
a detection unit, configured to: when the interface element on the first interface includes at least one widget icon, separately detect whether the at least one widget icon has a corresponding small-sized widget icon;
a replacement unit, configured to: when the at least one widget icon has a corresponding small-sized widget icon, replace the at least one widget icon with the corresponding small-sized widget icon according to the space required by the new interface element; and
an addition unit, configured to: when the remaining continuous space of the adjusted first interface is sufficient to accommodate the new interface element, add the new interface element to the remaining continuous space of the adjusted first interface.

With reference to the first possible implementation manner of the second aspect of the present invention, in a second possible implementation manner of the second aspect of the present invention, the adjustment module further includes:
a moving unit, configured to: when the at least one widget icon does not have a corresponding small-sized widget icon, move the interface element on the first interface to a second interface, so that the remaining continuous space of the adjusted first interface is sufficient to accommodate the new interface element; or
the moving unit is configured to: when the at least one widget icon does not have a corresponding small-sized widget icon, move the interface element other than the widget icons on the first interface to a preset folder, so that the remaining continuous space of the adjusted first interface is sufficient to accommodate the new interface element; and
the addition unit is further configured to: when the remaining continuous space of the adjusted first interface is sufficient to accommodate the new interface element, add the new interface element to the remaining continuous space of the adjusted first interface.

With reference to the first possible implementation manner of the second aspect of the present invention, in a third possible implementation manner of the second aspect of the present invention, the adjustment module further includes:
a moving unit, configured to: when the remaining continuous space of the adjusted first interface is insufficient to accommodate the new interface element, move the interface element on the first interface to a second interface, so that the remaining continuous space of the adjusted first interface is sufficient to accommodate the new interface element; or
the moving unit is configured to: when the remaining continuous space of the adjusted first interface is insufficient to accommodate the new interface element, move the interface element other than the widget icons on the first interface to a preset folder, so that the remaining continuous space of the adjusted first interface is sufficient to accommodate the new interface element; and
the addition unit is further configured to: when the remaining continuous space of the adjusted first interface is sufficient to accommodate the new interface element, add the new interface element to the remaining continuous space of the adjusted first interface.

With reference to the second aspect of the present invention, in a fourth possible implementation manner of the second aspect of the present invention, the adjustment module is specifically configured to:
when the interface element on the first interface does not include a widget icon, move the interface element on the first interface to a second interface, so that the remaining continuous space of the adjusted first interface is sufficient to accommodate the new interface element, and add the new interface element to the remaining continuous space of the adjusted first interface; or
move the interface element on the first interface to a preset folder, so that the remaining continuous space of the adjusted first interface is sufficient to accommodate the new interface element, and add the new interface element to the remaining continuous space of the adjusted first interface.

With reference to the second aspect of the present invention and the first to the fourth possible implementation manners of the second aspect of the present invention, in a fifth possible implementation manner of the second aspect of the present invention, the adjustment module is further configured to:
when a deletion operation signal of deleting an interface element on the first interface is detected, determine whether there is a widget icon on the first interface; and
if there is a widget icon on the first interface, detect whether the widget icon has a corresponding large-sized widget icon, and if the widget icon has a corresponding large-sized widget icon, after the interface element on the first interface is deleted, replace the widget icon with the corresponding large-sized widget icon.

According to the method and the apparatus for automatically adjusting an interface element in the embodiments of the present invention, when a user adds a new interface element and causes a layout of a first interface of an electronic device to change, it can be automatically determined, according to a position at which the new interface element is to be placed and required space, whether remaining continuous space of the first interface is sufficient to accommodate the new interface element. When the remaining continuous space of the first interface is insufficient to accommodate the new interface element, a position and a size of another interface element on the first interface are automatically adjusted according to the position at which the new interface element is to be placed and the required space, so that the first interface is sufficient to accommodate the new interface element. The foregoing method is automatically completed by the electronic device, and a user does not need to manually operate an interface element, which makes it convenient for the user to perform an operation, thereby bringing better experience to the user, and improving usage efficiency of a user interface at the same time.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a flowchart of a method for automatically adjusting an interface element according to Embodiment 1 of the present invention;
FIG. 2 is a flowchart of a method for automatically adjusting an interface element according to Embodiment 2 of the present invention;
FIG. 3 is a schematic diagram of different sizes of widget icons;
FIG. 4 is a schematic diagram of adjustment of a widget icon whose size is adjustable;
FIG. 5 is a schematic structural diagram of an apparatus for automatically adjusting an interface element according to Embodiment 3 of the present invention;
FIG. 6 is a schematic structural diagram of an apparatus for automatically adjusting an interface element according to Embodiment 4 of the present invention; and
FIG. 7 is a schematic structural diagram of an electronic device according to Embodiment 5 of the present invention.

### DESCRIPTION OF EMBODIMENTS

To make the objectives, technical solutions, and advantages of the embodiments of the present invention clearer, the following clearly and completely describes the technical solutions in the embodiments of the present invention with reference to the accompanying drawings in the embodiments of the present invention. Apparently, the described embodiments are some but not all of the embodiments of the present invention. All other embodiments obtained by a person of ordinary skill in the art based on the embodiments of the present invention without creative efforts shall fall within the protection scope of the present invention.

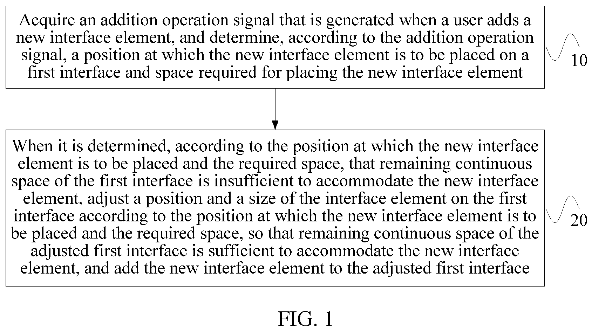

FIG. 1 is a flowchart of a method for automatically adjusting an interface element according to Embodiment 1 of the present invention. The method provided in this embodiment is mainly applied to an electronic device having a touchscreen, such as a mobile phone, a tablet computer, and a personal digital assistant (personal digital assistant, PAD for short). The present invention is executed by the electronic device, and specifically may be implemented by a module or a chip having a processing capability, such as a central processing unit (central process unit, CPU for short), in the electronic device. As shown in FIG. 1, the method in this embodiment may include the following steps:
Step 10: Acquire an addition operation signal that is generated when a user adds a new interface element, and determine, according to the addition operation signal, a position at which the new interface element is to be placed on a first interface and space required for placing the new interface element.

An operation of adding the new interface element by the user may be an operation of manually adding the new interface element by the user according to needs, or maybe an operation of automatically generating a shortcut icon by an application program during a process in which the user operates the application program. A touchscreen on an electronic device can detect the operation of the user, acquire the addition operation signal, and then determine, according to the acquired addition operation signal, the position at which the new interface element is to be placed and a size of the space required for placing the new interface element. The new interface element may be any one of the following icons: a widget (widget) icon, an application program icon, a folder icon, and a shortcut icon.

Step 20: When it is determined, according to the position at which the new interface element is to be placed and the required space, that remaining continuous space of the first interface is insufficient to accommodate the new interface element, adjust a position and a size of the interface element on the first interface according to the position at which the new interface element is to be placed and the required space, so that remaining continuous space of the adjusted first interface is sufficient to accommodate the new interface element, and add the new interface element to the adjusted first interface.

The continuous space herein refers to an N×M empty area existing on a screen of a desktop, and the empty area is an area in which no icons such as a widget widget icon, an application program icon, a folder icon, and a shortcut icon are placed. In the prior art, a desktop is usually divided into X×Y grid squares that have a same size, where X represents a quantity of horizontal grid squares, and Y represents a quantity of vertical grid squares. The N×M empty area is an area that includes N horizontal grid squares and M vertical grid squares, where N and M are both positive integers greater than or equal to 1. For example, when a user needs to add a 4×2 widget, the 4×2 widget requires 4×2 continuous space, and there cannot be any icon in the 4×2 continuous space.

A method for calculating the continuous space may be a traversing grid calculation manner. For example, if a user needs to add a 4x2 widget on the first interface, checking is started from the first grid square on the first interface, to check whether the first grid square is empty. If the first grid square is occupied, it is determined whether the second grid square is empty. If the first grid square is empty, it is determined whether a grid square on the right of the first grid square is empty. If a 4×2 widget needs to be added, a horizontal condition is met when there are at least three empty grid squares on the right of the first grid square. If the horizontal condition is met, it is further determined whether a vertical condition is met, that is, it is checked whether the first four gird squares among a next row of grid squares under the first grid square are empty. If the first four gird squares among the next row of grid squares are empty, it means that remaining continuous space is sufficient to accommodate the 4×2 widget. If some of the first four gird squares among the next row of grid squares are occupied, it means that the remaining continuous space is insufficient, and the second gird is checked, and the rest can be deduced by analog until all grid squares are traversed.

If the remaining continuous space of the first interface is sufficient to accommodate the new interface element, the new interface element is added to the first interface. There may be specifically the following two manners for adding the new interface element to the first interface:
A first manner: The new interface element is added to the remaining continuous space of the first interface. In this implementation manner, the remaining continuous space is not necessarily the position at which the new interface element is to be placed. When there is another interface element at the position at which the new interface element is to be placed, the new interface element maybe placed in the remaining continuous space.
A second manner: First, it is determined whether there is another interface element at the position at which the new interface element is to be placed. If there is no other interface element at the position at which the new interface element is to be placed, the new interface element is placed at the position at which the new interface element is to be placed. If there is another interface element at the position at which the new interface element is to be placed, the another interface element at the position at which the new interface element is to be placed is moved to the remaining continuous space of the first interface, and then, the new interface element is placed at the position at which the new interface element is to be placed. In this manner, another interface element at the position at which the new interface element is to be placed can be automatically moved to the remaining continuous space, and the new interface element is placed at the position at which the new interface element is to be placed. A user does not need to manually move another interface element at the position at which the new interface element is to be placed to the remaining continuous space, thereby bringing better experience to the user.

If the remaining continuous space of the first interface is insufficient to accommodate the new interface element, the electronic device can automatically adjust a position and a size of the interface element on the first interface according to the position at which the new interface element is to be placed and the required space. For example, if there is a widget icon on the first interface, the widget icon on the first interface is replaced with a smaller-sized widget icon. If the remaining continuous space is still insufficient to accommodate the new interface element after the widget icon is replaced with the smaller-sized widget icon, another interface element other than the widget icon on the first interface is merged into a preset folder, so that the adjusted first interface is sufficient to accommodate the new interface element, where the preset folder is an existing folder or a new folder. If there is no widget icon on the first interface, some interface elements or all interface elements on the first interface are merged into a preset folder, so that the adjusted first interface is sufficient to accommodate the new interface element. If there is no widget icon on the first interface, but sizes of other interface elements on the first interface can also be adjusted, for example, an application program icon and a folder icon also have corresponding small-sized icons, some or all application program icons and folder icons on the first interface are replaced with the small-sized icons, so that the adjusted first interface is sufficient to accommodate the new interface element.

According to the method in this embodiment, when a user adds a new interface element and causes a layout of a first interface of an electronic device to change, it can be automatically determined, according to a position at which the new interface element is to be placed and required space, whether remaining continuous space of the first interface is sufficient to accommodate the new interface element. When the remaining continuous space of the first interface is insufficient to accommodate the new interface element, a position and a size of another interface element on the first interface are automatically adjusted according to the position at which the new interface element is to be placed and the required space, so that the first interface is sufficient to accommodate the new interface element. The foregoing method is automatically completed by the electronic device, and a user does not need to manually operate an interface element, which makes it convenient for the user to perform an operation, thereby bringing better experience to the user, and improving usage efficiency of a user interface at the same time.

Several specific embodiments are used below to describe the technical solution of the embodiment shown in FIG. 1 in detail.

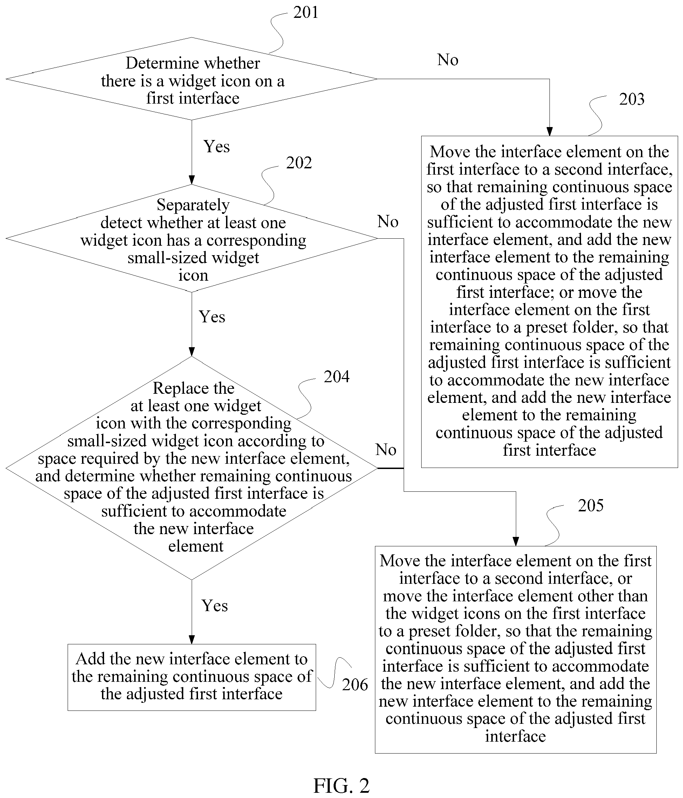

In the embodiment shown in FIG. 1, in step 20, if the remaining continuous space of the first interface is insufficient to accommodate the new interface element, the electronic device can automatically adjust a position and a size of the interface element on the first interface according to the position at which the new interface element is to be placed and the required space, so that the first interface is sufficient to accommodate the new interface element, and then add the new interface element to the first interface. Step 20 is described in detail in Embodiment 2 of the present invention. FIG. 2 is a flowchart of a method for automatically adjusting an interface element according to Embodiment 2 of the present invention. As shown in FIG. 2, the method in this embodiment may include the following steps:
Step 201: Determine whether there is a widget icon on a first interface.

If there is a widget icon on the first interface, perform step 202; if there is no widget icon on the first interface, perform step 203.

Step 202: Separately detect whether at least one widget icon has a corresponding small-sized widget icon.

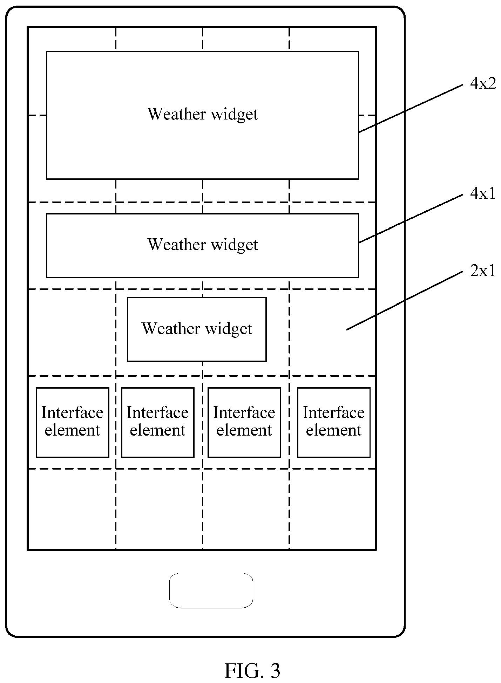

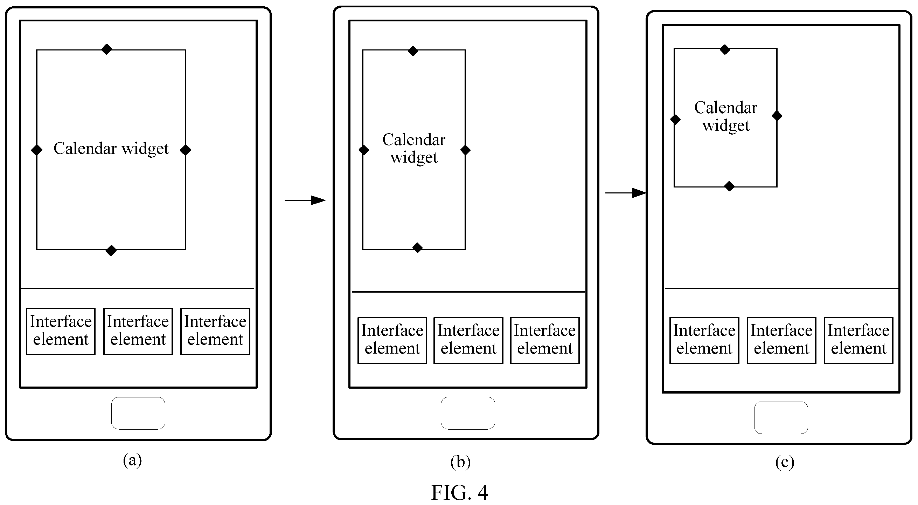

If the interface element on the first interface includes at least one widget icon, perform this step, to separately detect whether the at least one widget icon has a corresponding small-sized widget icon. In the prior art, to increase flexibility of a widget icon, various sizes of widget icons of a same widget are provided for a user to select from, and the user may select a widget icon of a suitable size according to a size of a display page and remaining continuous space. As shown in FIG. 3, FIG. 3 is a schematic diagram of different sizes of widget icons. FIG. 3 provides widget icons of three sizes: 2×1, 4×1, and 4×2. In addition, in the prior art, a widget icon whose size is adjustable can further be provided. The user may adjust a widget icon to a suitable size according to personal needs and preference. FIG. 4 is a schematic diagram of adjustment of a widget icon whose size is adjustable. An edit status can be entered by long pressing the widget icon in an empty area of the first interface. The widget icon in the edit status has border prompts, and a size of the widget icon can be changed by dragging central points of borders of the widget icon.

The first interface includes at least one widget icon, and the at least one widget icon may all have a small-sized widget icon or may not have a small-sized widget icon; or when the first interface includes two or more widget icons, some widget icons have small-sized widget icons, while some widget icons have small-sized widget icons. If the at least one widget icon on the first interface has a corresponding small-sized widget icon, perform step 204; if none of the widget icons on the first interface has a corresponding small-sized widget icon, perform step 205.

Step 203: Move the interface element on the first interface to a second interface, so that remaining continuous space of the adjusted first interface is sufficient to accommodate the new interface element, and add the new interface element to the remaining continuous space of the adjusted first interface; or move the interface element on the first interface to a preset folder, so that remaining continuous space of the adjusted first interface is sufficient to accommodate the new interface element, and add the new interface element to the remaining continuous space of the adjusted first interface.

When the interface element on the first interface is moved to the second interface, some desktop elements or all desktop elements on the first interface may be moved to the second interface according to space required by the new interface element, where the second interface may be a previous interface or a next interface adjacent to the first interface, or another interface. When the interface element on the first interface is moved to the preset folder, some desktop elements or all desktop elements on the first interface may also be moved to the preset folder according to space required by the new interface element, where the preset folder may be a new folder, or may be an existing folder on the first interface, which is not limited in this embodiment of the present invention.

Step 204: Replace the at least one widget icon with the corresponding small-sized widget icon according to space required by the new interface element, and determine whether remaining continuous space of the adjusted first interface is sufficient to accommodate the new interface element.

If the remaining continuous space of the first interface is sufficient to accommodate the new interface element, perform step 206; if the remaining continuous space of the first interface is insufficient to accommodate the new interface element, perform step 205.

Step 205: Move the interface element on the first interface to a second interface, or move the interface element other than the widget icons on the first interface to a preset folder, so that the remaining continuous space of the adjusted first interface is sufficient to accommodate the new interface element, and add the new interface element to the remaining continuous space of the adjusted first interface.

When the interface element on the first interface is moved to the second interface, some desktop elements or all desktop elements on the first interface may be moved to the second interface according to space required by the new interface element, where the second interface may be a previous interface or a next interface adjacent to the first interface, or another interface. When the interface element other than the widget icons on the first interface is moved to the preset folder, some desktop elements or all desktop elements except the widget icons on the first interface may also be moved to the preset folder according to space required by the new interface element, where the preset folder may be a new folder, or may be an existing folder on the first interface, which is not limited in this embodiment of the present invention.

Step 206: Add the new interface element to the remaining continuous space of the adjusted first interface.

It should be noted that if there is no widget icon on the first interface, or when the remaining continuous space is still insufficient to accommodate the new interface element after an original widget icon is replaced with a corresponding small-sized widget icon, an addition failure may be returned to a user.

In this embodiment, it is detected whether there is a widget icon on a first interface; if there is a widget icon on the first interface, and the widget icon has a corresponding small-sized widget icon, the widget icon is replaced with the small-sized widget icon, and a position of an interface element is adjusted, so that remaining continuous space on the first interface is sufficient to accommodate a new interface element; and then the new interface element is added to the first interface. The foregoing entire adjustment process is automatically completed by an electronic device, and a user does not need to participate in the adjustment process, which makes it convenient for the user to perform an operation, thereby bringing better experience to the user, and improving usage efficiency of a user interface at the same time.

Based on the foregoing Embodiment 1 and Embodiment 2, the solution of this embodiment of the present invention may further include the following steps: when the electronic device detects a deletion operation signal of deleting an interface element on the first interface from a user, determining whether there is a widget icon on the first interface; and if there is a widget icon on the first interface, detecting whether the widget icon has a corresponding large-sized widget icon, and if the widget icon has a corresponding large-sized widget icon, after the interface element on the first interface is deleted, replacing the widget icon with the corresponding large-sized widget icon. In the foregoing method, space of a display page can be fully used, and a large-sized widget icon can display more content, thereby improving usage efficiency of an interface, and improving user experience.

The solution of this embodiment is compared with the prior art below. In the prior art, when a user needs to add a new interface element, if space of a first interface is insufficient, but the user wants to keep an original widget icon, the user needs to manually delete the original widget icon whose size is relatively large, and then adds a small-sized widget icon. The user needs to execute at least the following three steps of operations: (1) deleting the widget icon whose size is relatively large on the first interface; (2) adding the new interface element; (3) after the new interface element is successfully added, adding the small-sized widget icon corresponding to the widget icon whose size is relatively large. However, in the method of this embodiment, the user only needs to execute one action of adding the new interface element, and then the electronic device automatically detects whether an original widget icon has a corresponding small-sized icon, and if the original widget icon has a corresponding small-sized widget icon, automatically replaces the original widget icon with the small-sized widget icon, and the user does not need to participate in the replacement process, which is automatically completed by the electronic device, thereby making it convenient for the user to perform an operation, and improving user experience.

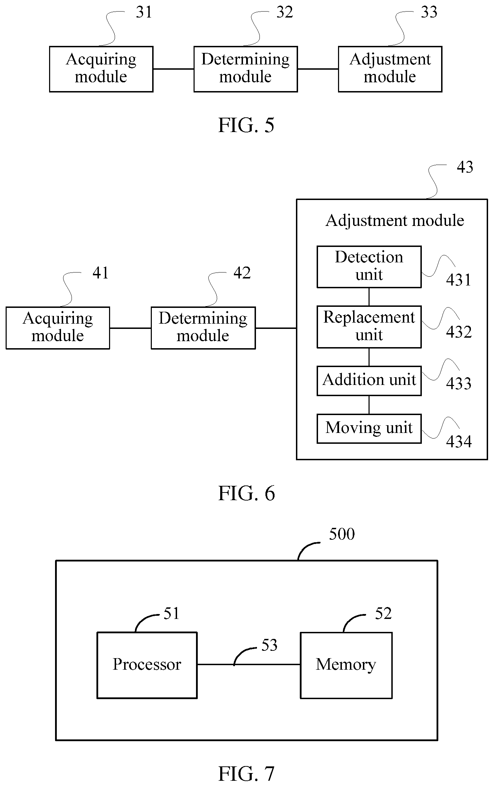

FIG. 5 is a schematic structural diagram of an apparatus for automatically adjusting an interface element according to Embodiment 3 of the present invention. As shown in FIG. 5, the apparatus for automatically adjusting an interface element provided in this embodiment includes an acquiring module 31, a determining module 32, and an adjustment module 33.

The acquiring module 31 is configured to acquire an addition operation signal that is generated when a user adds a new interface element.

The determining module 32 is configured to determine, according to the addition operation signal acquired by the acquiring module 31, a position at which the new interface element is to be placed on the first interface and space required for placing the new interface element.

The adjustment module 33 is configured to: when the determining module 32 determines, according to the position at which the new interface element is to be placed and the required space, that remaining continuous space of the first interface is insufficient to accommodate the new interface element, adjust a position and a size of the interface element on the first interface according to the position at which the new interface element is to be placed and the required space, so that remaining continuous space of the adjusted first interface is sufficient to accommodate the new interface element, and add the new interface element to the adjusted first interface.

Optionally, the adjustment module 33 is further configured to: when a deletion operation signal of deleting an interface element on the first interface is detected, determine whether there is a widget icon on the first interface; and if there is a widget icon on the first interface, detect whether the widget icon has a corresponding large-sized widget icon, and if the widget icon has a corresponding large-sized widget icon, after the interface element on the first interface is deleted, replace the widget icon with the corresponding large-sized widget icon.

The apparatus for automatically adjusting an interface element provided in this embodiment may be configured to execute the technical solution of Method Embodiment 1. A specific implementation manner and a technical effect are similar to those in the method embodiment, and details are not described herein again.

FIG. 6 is a schematic structural diagram of an apparatus for automatically adjusting an interface element according to Embodiment 4 of the present invention. As shown in FIG. 6, the apparatus for automatically adjusting an interface element provided in this embodiment includes an acquiring module 41, a determining module 42, and an adjustment module 43.

The acquiring module 41 is configured to acquire an addition operation signal that is generated when a user adds a new interface element.

The determining module 42 is configured to determine, according to the addition operation signal acquired by the acquiring module 41, a position at which the new interface element is to be placed on the first interface and space required for placing the new interface element.

The adjustment module 43 is configured to: when the determining module 42 determines, according to the position at which the new interface element is to be placed and the required space, that remaining continuous space of the first interface is insufficient to accommodate the new interface element, adjust a position and a size of the interface element on the first interface according to the position at which the new interface element is to be placed and the required space, so that remaining continuous space of the adjusted first interface is sufficient to accommodate the new interface element, and add the new interface element to the adjusted first interface.

In this embodiment, when the adjustment module 43 adjusts the position and the size of the interface element on the first interface according to the position at which the new interface element is to be placed and the required space, there are mainly the following three cases: a first case: there is at least one widget icon on the first interface, and the at least one widget icon has a corresponding small-sized widget icon; a second case: there is at least one widget icon on the first interface, but no widget icon has a corresponding small-sized widget icon; a third case: there is no widget icon on the first interface. How to adjust a position and a size of the interface element on the first interface in each of the three conditions is described below.

In this embodiment, the adjustment module 43 includes a detection unit 431, a replacement unit 432, and an addition unit 433, where the detection unit 431 is configured to: when the interface element on the first interface includes at least one widget icon, detect whether the at least one widget icon has a corresponding small-sized widget icon; the replacement unit 432 is configured to: when the at least one widget icon has a corresponding small-sized widget icon, replace the at least one widget icon with the corresponding small-sized widget icon according to the space required by the new interface element; and the addition unit 433 is configured to: when remaining continuous space of the adjusted first interface is sufficient to accommodate the new interface element, add the new interface element to the remaining continuous space of the adjusted first interface.

Further, the adjustment module 43 further includes a moving unit 434, where the moving unit 434 is configured to: when the at least one widget icon does not have a corresponding small-sized widget icon, move the interface element on the first interface to a second interface, so that the remaining continuous space of the adjusted first interface is sufficient to accommodate the new interface element; or the moving unit 434 is configured to: when the at least one widget icon does not have a corresponding small-sized widget icon, move the interface element other than the widget icons on the first interface to a preset folder, so that the remaining continuous space of the adjusted first interface is sufficient to accommodate the new interface element; and the addition unit is further configured to: when the remaining continuous space of the adjusted first interface is sufficient to accommodate the new interface element, add the new interface element to the remaining continuous space of the adjusted first interface.

The moving unit 434 is further configured to: when the remaining continuous space of the adjusted first interface is insufficient to accommodate the new interface element, move the interface element on the first interface to a second interface, so that the remaining continuous space of the adjusted first interface is sufficient to accommodate the new interface element; or move the interface element other than the widget icons on the first interface to a preset folder, so that the remaining continuous space of the adjusted first interface is sufficient to accommodate the new interface element; and the addition unit is further configured to: when the remaining continuous space of the adjusted first interface is sufficient to accommodate the new interface element, add the new interface element to the remaining continuous space of the adjusted first interface.

When the interface element on the first interface does not include a widget icon, the adjustment module 43 is specifically configured to move the interface element on the first interface to a second interface, so that the remaining continuous space of the adjusted first interface is sufficient to accommodate the new interface element, and add the new interface element to the remaining continuous space of the adjusted first interface; or move the interface element on the first interface to a preset folder, so that the remaining continuous space of the adjusted first interface is sufficient to accommodate the new interface element, and add the new interface element to the remaining continuous space of the adjusted first interface.

Optionally, the adjustment module 43 is further configured to: when a deletion operation signal of deleting an interface element on the first interface is detected, determine whether there is a widget icon on the first interface; and if there is a widget icon on the first interface, detect whether the widget icon has a corresponding large-sized widget icon, and if the widget icon has a corresponding large-sized widget icon, after the interface element on the first interface is deleted, replace the widget icon with the corresponding large-sized widget icon.

The apparatus for automatically adjusting an interface element provided in this embodiment may be configured to execute the technical solution of Method Embodiment 2. A specific implementation manner and a technical effect are similar to those in the method embodiment, and details are not described herein again.

FIG. 7 is a schematic structural diagram of an electronic device according to Embodiment 5 of the present invention. As shown in FIG. 7, the electronic device 500 provided in this embodiment includes at least one processor 51, a memory 52, and at least one communications bus 53, where the communications bus 53 is configured to implement connection and communication between these components, the processor 51 is configured to execute an executable instruction, such as a computer program, stored in the memory 52, and the memory 52 may include a high-speed random access memory (RAM: Random Access Memory), and may further include a non-volatile memory (non-volatile memory), for example, at least one magnetic disk storage.

In this embodiment, the memory 52 stores a program, and the processor 51 executes the program stored in the memory 52, to execute the following operations:
acquiring an addition operation signal that is generated when a user adds a new interface element, and determining, according to the addition operation signal, a position at which the new interface element is to be placed on a first interface and space required for placing the new interface element; and
when it is determined, according to the position at which the new interface element is to be placed and the required space, that remaining continuous space of the first interface is insufficient to accommodate the new interface element, adjusting a position and a size of the interface element on the first interface according to the position at which the new interface element is to be placed and the required space, so that remaining continuous space of the adjusted first interface is sufficient to accommodate the new interface element, and adding the new interface element to the adjusted first interface.

When the processor 51 adjusts the position and the size of the interface element on the first interface according to the position at which the new interface element is to be placed and the required space, so that the remaining continuous space of the adjusted first interface is sufficient to accommodate the new interface element, and adds the new interface element to the adjusted first interface, the processor 51 is specifically configured to:
if the interface element on the first interface includes at least one widget icon, separately detect whether the at least one widget icon has a corresponding small-sized widget icon; if the at least one widget icon has a corresponding small-sized widget icon, replace the at least one widget icon with the corresponding small-sized widget icon according to the space required by the new interface element; and if remaining continuous space of the adjusted first interface is sufficient to accommodate the new interface element, add the new interface element to the remaining continuous space of the adjusted first interface; if the at least one widget icon does not have a corresponding small-sized widget icon, move the interface element on the first interface to a second interface, so that the remaining continuous space of the adjusted first interface is sufficient to accommodate the new interface element, and add the new interface element to the remaining continuous space of the adjusted first interface; or move the interface element other than the widget icons on the first interface to a preset folder, so that the remaining continuous space of the adjusted first interface is sufficient to accommodate the new interface element, and add the new interface element to the remaining continuous space of the adjusted first interface.

If the remaining continuous space of the adjusted first interface is insufficient to accommodate the new interface element, the processor 51 is specifically configured to move the interface element on the first interface to a second interface, so that the remaining continuous space of the adjusted first interface is sufficient to accommodate the new interface element, and add an interface element to the remaining continuous space of the adjusted first interface; or move the interface element other than the widget icons on the first interface to a preset folder, so that the remaining continuous space of the adjusted first interface is sufficient to accommodate the new interface element, and add the new interface element to the remaining continuous space of the adjusted first interface.

When the interface element on the first interface does not include a widget icon, the processor 51 is specifically configured to move the interface element on the first interface to a second interface, so that the remaining continuous space of the adjusted first interface is sufficient to accommodate the new interface element, and add the new interface element to the remaining continuous space of the adjusted first interface; or move the interface element on the first interface to a preset folder, so that the remaining continuous space of the adjusted first interface is sufficient to accommodate the new interface element, and add the new interface element to the remaining continuous space of the adjusted first interface.

Optionally, the processor 51 is further configured to: when a deletion operation signal of deleting an interface element on the first interface is detected, determine whether there is a widget icon on the first interface; and if there is a widget icon on the first interface, detect whether the widget icon has a corresponding large-sized widget icon, and if the widget icon has a corresponding large-sized widget icon, after the interface element on the first interface is deleted, replace the widget icon with the corresponding large-sized widget icon.

The electronic device provided in this embodiment may be configured to execute the technical solutions of Method Embodiment 1 and Method Embodiment 2. A specific implementation manner and a technical effect are similar to those in the method embodiments, and details are not described herein again.

Persons of ordinary skill in the art may understand that all or some of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

## Claims

1. A method for automatically adjusting an interface element, **characterized in** comprising:
acquiring an addition operation signal that is generated when a user adds a new interface element, and determining, according to the addition operation signal, a position at which the new interface element is to be placed on a first interface and space required for placing the new interface element; and
when it is determined, according to the position at which the new interface element is to be placed and the required space, that remaining continuous space of the first interface is insufficient to accommodate the new interface element, adjusting a position and a size of the interface element on the first interface according to the position at which the new interface element is to be placed and the required space, so that remaining continuous space of the adjusted first interface is sufficient to accommodate the new interface element, and adding the new interface element to the adjusted first interface.

2. The method according to claim 1, **characterized in that** the adjusting a position and a size of the interface element on the first interface according to the position at which the new interface element is to be placed and the required space, so that remaining continuous space of the adjusted first interface is sufficient to accommodate the new interface element, and adding the new interface element to the adjusted first interface comprises:
if the interface element on the first interface comprises at least one widget icon, separately detecting whether the at least one widget icon has a corresponding small-sized widget icon;
if the at least one widget icon has a corresponding small-sized widget icon, replacing the at least one widget icon with the corresponding small-sized widget icon according to the space required by the new interface element; and
if the remaining continuous space of the adjusted first interface is sufficient to accommodate the new interface element, adding the new interface element to the remaining continuous space of the adjusted first interface.

3. The method according to claim 2, **characterized in that** if the at least one widget icon does not have a corresponding small-sized widget icon, the method further comprises:
moving the interface element on the first interface to a second interface, so that the remaining continuous space of the adjusted first interface is sufficient to accommodate the new interface element, and adding the new interface element to the remaining continuous space of the adjusted first interface; or
moving the interface element other than the widget icons on the first interface to a preset folder, so that the remaining continuous space of the adjusted first interface is sufficient to accommodate the new interface element, and adding the new interface element to the remaining continuous space of the adjusted first interface.

4. The method according to claim 2, **characterized in that** if the remaining continuous space of the adjusted first interface is insufficient to accommodate the new interface element, the method further comprises:
moving the interface element on the first interface to a second interface, so that the remaining continuous space of the adjusted first interface is sufficient to accommodate the new interface element, and adding the new interface element to the remaining continuous space of the adjusted first interface; or
moving the interface element other than the widget icons on the first interface to a preset folder, so that the remaining continuous space of the adjusted first interface is sufficient to accommodate the new interface element, and adding the new interface element to the remaining continuous space of the adjusted first interface.

5. The method according to claim 1, **characterized in that** the adjusting a position and a size of the interface element on the first interface according to the position at which the new interface element is to be placed and the required space, so that remaining continuous space of the adjusted first interface is sufficient to accommodate the new interface element, and adding the new interface element to the adjusted first interface comprises:
when the interface element on the first interface does not comprise a widget icon, moving the interface element on the first interface to a second interface, so that the remaining continuous space of the adjusted first interface is sufficient to accommodate the new interface element, and adding the new interface element to the remaining continuous space of the adjusted first interface; or
when the interface element on the first interface does not comprise a widget icon, moving the interface element on the first interface to a preset folder, so that the remaining continuous space of the adjusted first interface is sufficient to accommodate the new interface element, and adding the new interface element to the remaining continuous space of the adjusted first interface.

6. The method according to any one of claims 1 to 5, **characterized by** further comprising:
when a deletion operation signal of deleting an interface element on the first interface is detected, determining whether there is a widget icon on the first interface; and
if there is a widget icon on the first interface, detecting whether the widget icon has a corresponding large-sized widget icon, and if the widget icon has a corresponding large-sized widget icon, after the interface element on the first interface is deleted, replacing the widget icon with the corresponding large-sized widget icon.

7. An apparatus for automatically adjusting an interface element, comprising:
an acquiring module, configured to acquire an addition operation signal that is generated when a user adds a new interface element;
a determining module, configured to determine, according to the addition operation signal acquired by the acquiring module, a position at which the new interface element is to be placed on the first interface and space required for placing the new interface element; and
an adjustment module, configured to: when the determining module determines, according to the position at which the new interface element is to be placed and the required space, that remaining continuous space of the first interface is insufficient to accommodate the new interface element, adjust a position and a size of the interface element on the first interface according to the position at which the new interface element is to be placed and the required space, so that remaining continuous space of the adjusted first interface is sufficient to accommodate the new interface element, and add the new interface element to the adjusted first interface.

8. The apparatus according to claim 7, **characterized in that** the adjustment module comprises:
a detection unit, configured to: when the interface element on the first interface comprises at least one widget icon, separately detect whether the at least one widget icon has a corresponding small-sized widget icon;
a replacement unit, configured to: when the at least one widget icon has a corresponding small-sized widget icon, replace the at least one widget icon with the corresponding small-sized widget icon according to the space required by the new interface element; and
an addition unit, configured to: when the remaining continuous space of the adjusted first interface is sufficient to accommodate the new interface element, add the new interface element to the remaining continuous space of the adjusted first interface.

9. The apparatus according to claim 8, **characterized in that** the adjustment module further comprises:
a moving unit, configured to: when the at least one widget icon does not have a corresponding small-sized widget icon, move the interface element on the first interface to a second interface, so that the remaining continuous space of the adjusted first interface is sufficient to accommodate the new interface element;
or
the moving unit is configured to: when the at least one widget icon does not have a corresponding small-sized widget icon, move the interface element other than the widget icons on the first interface to a preset folder, so that the remaining continuous space of the adjusted first interface is sufficient to accommodate the new interface element; and
the addition unit is further configured to: when the remaining continuous space of the adjusted first interface is sufficient to accommodate the new interface element, add the new interface element to the remaining continuous space of the adjusted first interface.

10. The apparatus according to claim 8, **characterized in that** the adjustment module further comprises:
a moving unit, configured to: when the remaining continuous space of the adjusted first interface is insufficient to accommodate the new interface element, move the interface element on the first interface to a second interface, so that the remaining continuous space of the adjusted first interface is sufficient to accommodate the new interface element;
or
the moving unit is configured to: when the remaining continuous space of the adjusted first interface is insufficient to accommodate the new interface element, move the interface element other than the widget icons on the first interface to a preset folder, so that the remaining continuous space of the adjusted first interface is sufficient to accommodate the new interface element; and
the addition unit is further configured to: when the remaining continuous space of the adjusted first interface is sufficient to accommodate the new interface element, add the new interface element to the remaining continuous space of the adjusted first interface.

11. The apparatus according to claim 7, **characterized in that** the adjustment module is specifically configured to:
When the interface element on the first interface does not comprise a widget icon, move the interface element on the first interface to a second interface, so that the remaining continuous space of the adjusted first interface is sufficient to accommodate the new interface element, and add the new interface element to the remaining continuous space of the adjusted first interface; or
move the interface element on the first interface to a preset folder, so that the remaining continuous space of the adjusted first interface is sufficient to accommodate the new interface element, and add the new interface element to the remaining continuous space of the adjusted first interface.

12. The apparatus according to any one of claims 7 to 11, **characterized in that** the adjustment module is further configured to:
when a deletion operation signal of deleting an interface element on the first interface is detected, determine whether there is a widget icon on the first interface; and
if there is a widget icon on the first interface, detect whether the widget icon has a corresponding large-sized widget icon, and if the widget icon has a corresponding large-sized widget icon, after the interface element on the first interface is deleted, replace the widget icon with the corresponding large-sized widget icon.
